# EUROPEAN PATENT SPECIFICATION

(11) **EP 2 815 945 B1**
(45) Date of publication and mention of the grant of the patent: **09.10.2019**
(21) Application number: 12868440.4
(22) Date of filing: 17.02.2012
(51) Int. Cl.: B60W 10/08, B60K 6/445, B60W 10/06, B60W 20/00

(54) **VEHICLE AND VEHICLE CONTROL METHOD**
FAHRZEUG UND FAHRZEUGSTEUERUNGSVERFAHREN
VÉHICULE ET PROCÉDÉ DE COMMANDE DE VÉHICULE

(43) Date of publication of application: 24.12.2014
(73) Proprietor: Toyota Jidosha Kabushiki Kaisha, Toyota-shi, Aichi 471-8571 (JP)
(72) Inventor: ENDO, Hiroki, Toyota-shi Aichi 471-8571 (JP); YAMAMOTO, Masaya, Toyota-shi Aichi 471-8571 (JP)
(74) Representative: D Young & Co LLP
(86) International application number: PCT/JP2012/053760
(87) International publication number: WO 2013/121574

(56) References cited:
- EP-A2- 1 593 826
- WO-A1-03/076834
- WO-A1-2007/096756
- FR-A1- 2 962 096
- JP-A- 2008 285 008
- JP-A- 2009 184 383
- JP-A- 2010 120 449

## Description

### TECHNICAL FIELD

The present invention relates to controlling a vehicle incorporating a rotating electric machine serving as a driving source and a power storage device supplying electric power to the rotating electric machine.

### BACKGROUND ART

Japanese Patent Laying-Open No. 2008-296619 (PTD 1) discloses a technique of changing relation between a stroke amount of an accelerator pedal and a requested amount of driving force of an electrically-powered vehicle to nonlinear relation such that the requested amount of the driving force corresponding to the stroke amount of the accelerator pedal decreases while the driving force is limited.

### CITATION LIST

### PATENT DOCUMENT

PTD 1: Japanese Patent Laying-Open No. 2008-296619 FR 2962 096A1 discloses a hybrid vehicle according to the preamble of claim 1, as well as a control method according to the preamble of claim 9.

WO 2007/096756A1 relates to a control apparatus and method for an internal combustion engine.

### SUMMARY OF INVENTION

### TECHNICAL PROBLEM

When the limitation on the driving force is canceled, however, the requested amount of the driving force corresponding to the stroke amount of the accelerator pedal may be varied. This may cause an occupant to feel uncomfortable with the occurrence of driving force variation not intended by the occupant.

An object of the present invention is to provide a vehicle in which the occurrence of driving force variation not intended by an occupant is suppressed when limitation on the driving force is canceled, and a method of controlling the vehicle.

### SOLUTION TO PROBLEM

The invention is defined in the appended claims
A vehicle according to one aspect of this invention is a vehicle as defined by claim 1.

A method of controlling a vehicle according to another aspect of this invention is a method as defined by claim 9.

### ADVANTAGEOUS EFFECTS OF INVENTION

According to this invention, the increase rate of the physical amount related to driving is limited when the selection of the prescribed running mode is canceled. Thus, driving force variation can be suppressed. Therefore, a vehicle in which driving force variation is suppressed when limitation on driving force is canceled, and a method of controlling the vehicle can be provided.

### BRIEF DESCRIPTION OF DRAWINGS

Fig. 1 is a general block diagram of a vehicle according to an embodiment.
Fig. 2 illustrates relation between requested power and running power when each running mode is selected.
Fig. 3 explains running power variation when a second CD mode is canceled.
Fig. 4 is a functional block diagram of an ECU incorporated in the vehicle according to the embodiment.
Fig. 5 illustrates relation between a vehicle speed V and an increase rate ΔPtrv of the running power.
Fig. 6 illustrates relation between a stroke amount of an accelerator pedal and increase rate ΔPtrv of the running power.
Fig. 7 is a flowchart (No. 1) illustrating the control structure of a program executed by the ECU incorporated in the vehicle according to the embodiment.
Fig. 8 is a flowchart (No. 2) illustrating the control structure of a program executed by the ECU incorporated in the vehicle according to the embodiment.
Fig. 9 is a timing chart illustrating operation of the ECU incorporated in the vehicle according to the embodiment.

### DESCRIPTION OF EMBODIMENTS

An embodiment of the present invention will be described below with reference to the drawings. In the following description, the same elements are designated by the same reference characters. Their designations and functions are also the same. Thus, detailed descriptions thereof will not be repeated.

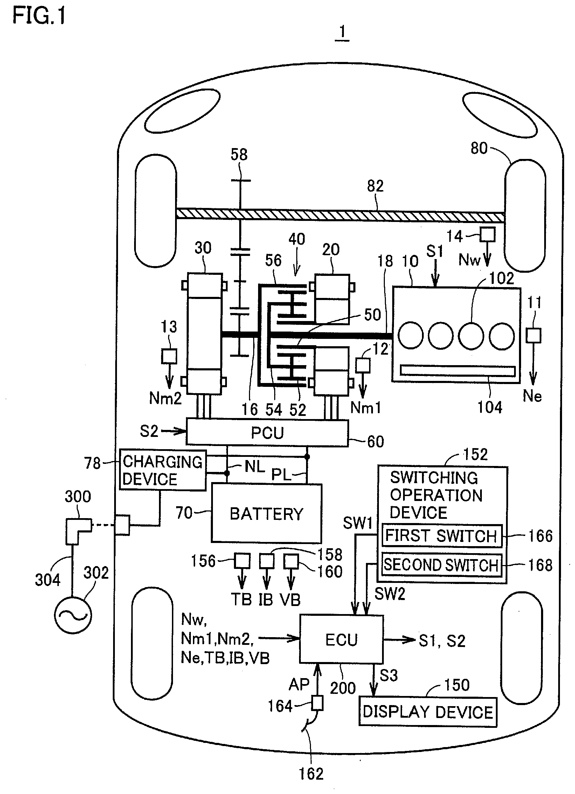

Referring to Fig. 1, a general block diagram of a hybrid vehicle 1 (simply referred to as vehicle 1 in the following description) according to this embodiment is described. Vehicle 1 includes an engine 10, a first motor generator (hereinafter referred to as first MG) 20, a second motor generator (hereinafter referred to as second MG) 30, a power split device 40, a reduction gear 58, a PCU (Power Control Unit) 60, a battery 70, a charging device 78, a drive wheel 80, a display device 150, a switching operation device 152, and an ECU (Electronic Control Unit) 200.

Vehicle 1 runs with driving force output from at least one of engine 10 and second MG 30. Motive power generated by engine 10 is split into two paths by power split device 40. One of them is a path through which the power is transmitted to drive wheel 80 via reduction gear 58, and the other is a path through which the power is transmitted to first MG 20.

Each of first MG 20 and second MG 30 is a three-phase AC rotating electric machine, for example. First MG 20 and second MG 30 are driven by PCU 60.

First MG 20 has the function of a generator for generating power using the motive power from engine 10 that is split by power split device 40, to charge battery 70 via PCU 60. In addition, first MG 20 rotates a crankshaft 18 serving as an output shaft of engine 10, with electric power received from battery 70. First MG 20 thus has the function of a starter for starting engine 10.

Second MG 30 has the function of a driving motor for providing driving force to drive wheel 80 by using at least one of electric power stored in battery 70 and electric power generated by first MG 20. Second MG 30 also has the function of a generator for charging battery 70 via PCU 60 by using electric power generated by regenerative braking.

Engine 10 is an internal combustion engine such as a gasoline engine or a diesel engine.

Engine 10 includes a plurality of cylinders 102, and a fuel injection device 104 for supplying fuel to each of the plurality of cylinders 102. Engine 10 is only required to have at least one cylinder 102.

In response to a control signal S1 from ECU 200, fuel injection device 104 injects a suitable amount of fuel at suitable timing into each cylinder, and stops the fuel injection into each cylinder. An amount of fuel injected by fuel injection device 104 is adjusted based on injection time.

Engine 10 is further provided with an engine rotational speed sensor 11. Engine rotational speed sensor 11 detects a rotational speed Ne of crankshaft 18 of engine 10 (hereinafter referred to as engine speed). Engine rotational speed sensor 11 transmits a signal indicating detected engine speed Ne to ECU 200.

Power split device 40 mechanically couples three elements, i.e., a rotation shaft 16 for rotating drive wheel 80, crankshaft 18 of engine 10, and a rotation shaft of first MG 20, to one another. Power split device 40 uses one of the three elements as a reaction force element, to allow the transmission of motive power between the other two elements. A rotation shaft of second MG 30 is coupled to rotation shaft 16.

Power split device 40 is a planetary gear mechanism including a sun gear 50, pinion gears 52, a carrier 54, and a ring gear 56. Pinion gears 52 are engaged with sun gear 50 and ring gear 56. Carrier 54 supports pinion gears 52 so that they are rotatable on their own axes, and is coupled to crankshaft 18 of engine 10. Sun gear 50 is coupled to the rotation shaft of first MG 20. Ring gear 56 is coupled to the rotation shaft of second MG 30 and reduction gear 58 via rotation shaft 16.

Reduction gear 58 transmits the motive power from power split device 40 and second MG 30 to drive wheel 80. Reduction gear 58 also transmits a reaction force from a road surface received by drive wheel 80 to power split device 40 and second MG 30.

PCU 60 includes a plurality of switching elements. PCU 60 controls on/off operation of the switching elements to convert DC power stored in battery 70 to AC power for driving first MG 20 and second MG 30. PCU 60 includes a converter and an inverter (neither shown) controlled in response to a control signal S2 from ECU 200. The converter boosts a voltage of the DC power received from battery 70, and outputs the power to the inverter. The inverter converts the DC power output from the converter to AC power, and outputs the power to first MG 20 and/or second MG 30. As a result, first MG 20 and/or second MG 30 are driven with the electric power stored in battery 70. The inverter converts AC power generated by first MG 20 and/or second MG 30 to DC power, and outputs the power to the converter. The converter down-converts a voltage of the DC power output from the inverter, and outputs the power to battery 70. As a result, battery 70 is charged with the electric power generated by first MG 20 and/or second MG 30. The converter may not be provided.

Battery 70 is a power storage device, and is a rechargeable DC power supply. A secondary battery such as a nickel-metal hydride battery or a lithium-ion battery is used as battery 70. Battery 70 has a voltage of about 200 V, for example. Battery 70 is charged with the electric power generated by first MG 20 and/or second MG 30 as described above, and may further be charged with electric power supplied from an external power supply 302. Battery 70 is not limited to a secondary battery, but may be a capacitor, a solar cell, or a fuel cell, for example, which is capable of generating a DC voltage.

Battery 70 is provided with a battery temperature sensor 156, a current sensor 158, and a voltage sensor 160.

Battery temperature sensor 156 detects a battery temperature TB of battery 70. Battery temperature sensor 156 transmits a signal indicating battery temperature TB to ECU 200.

Current sensor 158 detects a current IB of battery 70. Current sensor 158 transmits a signal indicating current IB to ECU 200.

Voltage sensor 160 detects a voltage VB of battery 70. Voltage sensor 160 transmits a signal indicating voltage VB to ECU 200.

ECU 200 estimates a remaining capacity (referred to as SOC (State of Charge) in the following description) of battery 70 based on current IB, voltage VB and battery temperature TB of battery 70. ECU 200 may estimate an OCV (Open Circuit Voltage) based on current IB, voltage VB and battery temperature TB, to estimate the SOC of battery 70 based on the estimated OCV and a prescribed map, for example. Alternatively, ECU 200 may sum up a charge current and a discharge current of battery 70 to estimate the SOC of battery 70, for example.

Charging device 78 charges battery 70 with electric power supplied from external power supply 302 when a charging plug 300 is inserted into vehicle 1. Charging plug 300 is connected to one end of a charging cable 304. Charging cable 304 has the other end connected to external power supply 302. Charging device 78 has a positive electrode terminal connected to a power supply line PL connecting a positive electrode terminal of PCU 60 to a positive electrode terminal of battery 70. Charging device 78 has a negative electrode terminal connected to a ground line NL connecting a negative electrode terminal of PCU 60 to a negative electrode terminal of battery 70.

First MG 20 is provided with a first resolver 12. First resolver 12 detects a speed Nm1 of first MG 20. First resolver 12 transmits a signal indicating detected speed Nm1 to ECU 200.

Second MG 30 is provided with a second resolver 13. Second resolver 13 detects a speed Nm2 of second MG 30. Second resolver 13 transmits a signal indicating detected speed Nm2 to ECU 200.

A drive shaft 82 coupling reduction gear 58 to drive wheel 80 is provided with a wheel speed sensor 14. Wheel speed sensor 14 detects a speed Nw of drive wheel 80. Wheel speed sensor 14 transmits a signal indicating detected speed Nw to ECU 200. ECU 200 calculates a vehicle speed V based on received speed Nw. ECU 200 may calculate vehicle speed V based on speed Nm2 of second MG 30 instead of speed Nw.

A driver's seat is provided with an accelerator pedal 162. Accelerator pedal 162 includes a pedal stroke sensor 164. Pedal stroke sensor 164 detects a stroke amount AP of accelerator pedal 162. Pedal stroke sensor 164 transmits a signal indicating stroke amount AP to ECU 200. Instead of pedal stroke sensor 164, an accelerator pedal effort sensor for detecting pedal effort of an occupant of vehicle 1 on the accelerator pedal may be used.

ECU 200 generates control signal S1 for controlling engine 10, and outputs generated control signal S1 to engine 10. ECU 200 generates control signal S2 for controlling PCU 60, and outputs generated control signal S2 to PCU 60. ECU 200 generates a control signal S3 for controlling display device 150, and outputs generated control signal S3 to display device 150.

ECU 200 controls engine 10, PCU 60 and the like, to control the entire hybrid system, namely, charge and discharge states of battery 70, and operating states of engine 10, first MG 20 and second MG 30, so that vehicle 1 can run most efficiently.

ECU 200 calculates requested power corresponding to stroke amount AP of accelerator pedal 162 provided on the driver's seat and vehicle speed V. If auxiliary machinery is to be activated, ECU 200 adds power required to activate the auxiliary machinery to the calculated requested power. The auxiliary machinery as used herein refers to an air-conditioner, for example. ECU 200 controls a torque of first MG 20, a torque of second MG 30, or an output from engine 10, depending on the calculated requested power.

ECU 200 controls vehicle 1 in accordance with one of a plurality of running modes. The plurality of running modes in this embodiment include a first CD (Charge Depleting) mode, a second CD mode, and a CS (Charge Sustaining) mode.

The first and second CD modes are running modes in which EV running is given a higher priority than HV running. When the first and second CD modes are selected, ECU 200 controls vehicle 1 under execution conditions for executing EV running with a higher priority than HV running.

The CS mode is a running mode in which HV running is given a higher priority than EV running. When the CS mode is selected, ECU 200 controls vehicle 1 under execution conditions for executing HV running with a higher priority than EV running.

The EV running refers to a running state of vehicle 1, in which vehicle 1 runs using second MG 30, with engine 10 being stopped. The HV running refers to a running state of vehicle 1, in which engine 10 is activated and first MG 20 generates power to maintain the SOC of battery 70 at a target value.

The second CD mode is a running mode for continuing EV running longer than when the first CD mode is selected. When the second CD mode is selected, ECU 200 controls vehicle 1 such that a target value of running power which is determined by the requested power is limited further than when the first CD mode is selected.

Display device 150 displays a currently selected running mode and the like in response to control signal S3 from ECU 200. Display device 150 may be implemented as an LCD (Liquid Crystal Display) or an LED (Light-Emitting Diode), for example. Instead of display device 150, a notification device for notifying the occupant of vehicle 1 of a currently selected running mode by voice or the like may be used.

Switching operation device 152 receives operation of switching the running mode from the occupant of vehicle 1. Switching operation device 152 includes a push switch, a slide switch, a lever switch, a dial switch, or a touch panel, for example.

In this embodiment, switching operation device 152 includes a first switch 166 and a second switch 168.

First switch 166 is provided around the driver's seat, and receives operation for switching from one of the first CD mode and the CS mode to the other mode. When the operation by the occupant of vehicle 1 is received, first switch 166 transmits a signal SW1 indicating the reception of the operation to ECU 200.

In response to signal SW1, ECU 200 switches the running mode from one of the first CD mode and the CS mode currently selected to the other mode not currently selected.

In response to signal SW1 while the first CD mode is selected, for example, ECU 200 switches the running mode from the first CD mode to the CS mode. In response to signal SW1 while the CS mode is selected, for example, ECU 200 switches the running mode from the CS mode to the first CD mode.

Second switch 168 is provided around the driver's seat, and receives first operation for switching the running mode from the first CD mode or the CS mode to the second CD mode (for selecting the second CD mode), and second operation for switching the running mode from the second CD mode to the first CD mode or the CS mode (for canceling the selection of the second CD mode). When the operation by the occupant of vehicle 1 is received, second switch 168 transmits a signal SW2 indicating the reception of the operation to ECU 200.

In response to signal SW2, ECU 200 determines whether the received operation is the first operation or the second operation based on the currently selected running mode. For example, in response to signal SW2 while the first CD mode or the CS mode is selected, ECU 200 determines that the first operation has been received. In response to signal SW2 while the second CD mode is selected, ECU 200 determines that the second operation has been received.

When it is determined that the first operation has been received, ECU 200 switches the running mode from the first CD mode or the CS mode to the second CD mode. That is, ECU 200 selects the second CD mode when it is determined that the first operation has been received.

If it is determined that the second operation has been received, ECU 200 switches the running mode from the second CD mode to the first CD mode or the CS mode. That is, ECU 200 cancels the selection of the second CD mode when it is determined that the second operation has been received.

In this embodiment, while the second CD mode is selected, when a state of vehicle 1 satisfies a prescribed cancellation condition, ECU 200 cancels the selection of the second CD mode.

The prescribed cancellation condition includes at least one of a condition that second switch 168 described above has been operated while the second CD mode is selected, a first condition that engine 10 is being started, a second condition that vehicle speed V is equal to or higher than a threshold value, a third condition that warm-up of engine 10 is requested, a fourth condition that the SOC of battery 70 is equal to or smaller than a threshold value, a fifth condition that the temperature of battery 70 is out of a prescribed range, a sixth condition that heating is requested, and a seventh condition that stroke amount AP of accelerator pedal 162 is equal to or greater than a threshold value, for example. The seventh condition may be a condition that, in addition to or instead of stroke amount AP being equal to or greater than the threshold value, a variation in stroke amount AP of accelerator pedal 162 is equal to or greater than a threshold value.

Although ECU 200 is described as selecting the first CD mode when canceling the selection of the second CD mode, ECU 200 may select a running mode immediately before the second CD mode was selected, or may select the CS mode.

ECU 200 executes HV running and EV running in accordance with requested power Preq when each running mode is selected.

For example, when requested power Preq is equal to or smaller than a threshold value, ECU 200 executes EV running, and controls PCU 60 so that running power Ptrv corresponding to requested power Preq is generated only with an output from second MG 30.

When requested power Preq exceeds the threshold value, on the other hand, ECU 200 executes HV running, and controls PCU 60 and engine 10 so that running power Ptrv corresponding to requested power Preq is generated with an output from engine 10 and an output from second MG 30.

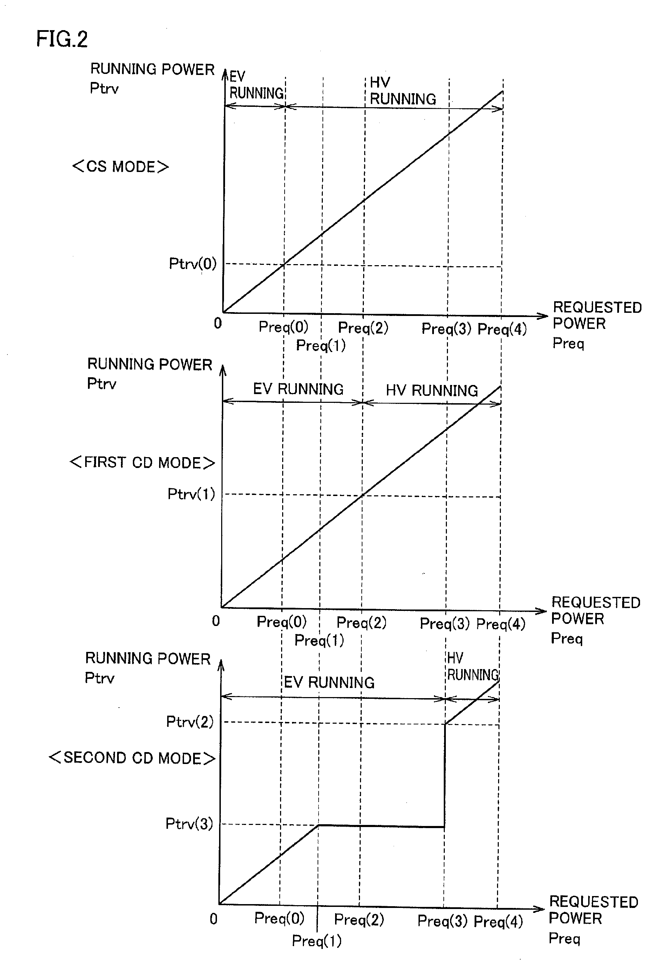

Fig. 2 illustrates relation between requested power Preq and running power Ptrv, and a change in running state, when each running mode is selected.

Specifically, Fig. 2 illustrates at the top the relation between requested power Preq and running power Ptrv, and the change in running state, when the CS mode is selected. At the top of Fig. 2, the ordinate represents running power Ptrv, and the abscissa represents requested power Preq.

Fig. 2 illustrates in the middle the relation between requested power Preq and running power Ptrv, and the change in running state, when the first CD mode is selected. In the middle of Fig. 2, the ordinate represents running power Ptrv, and the abscissa represents requested power Preq.

Fig. 2 illustrates at the bottom the relation between requested power Preq and running power Ptrv, and the change in running state, when the second CD mode is selected. At the bottom of Fig. 2, the ordinate represents running power Ptrv, and the abscissa represents requested power Preq. Each abscissa in Fig. 2 may represent requested driving force or stroke amount AP of accelerator pedal 162 instead of the requested power. Each ordinate in Fig. 2 may represent driving force or a driving torque instead of the running power.

In Fig. 2, although requested power Preq and running power Ptrv are described as having linear relation in each running mode except for a period between Preq(1) and Preq(3) of requested power Preq in the second CD mode, they are not particularly limited to have the linear relation. For example, requested power Preq and running power Ptrv may have nonlinear relation in which running power Ptrv monotonously increases as requested power Preq increases, except for the above period. In Fig. 2, Preq(4) indicates an upper limit value of requested power Preq. When requested power Preq is Preq(4), accelerator pedal 162 is depressed until an upper limit value of stroke amount AP is reached.

As shown in Fig. 2, a threshold value Preq(0) is smaller than threshold values Preq(2) and Preq(3) when the first CD mode and the second CD mode are selected. Threshold value Preq(0) is a threshold value of requested power Preq for switching the running state between HV running and EV running when the CS mode is selected as the running mode.

Thus, when the CS mode is selected, an area of requested power Preq where HV running is executed (between Preq(0) and Preq(3)) is larger than the area when the first CD mode or the second CD mode is selected. When the CS mode is selected, therefore, HV running is executed with a higher priority than when the first CD mode or the second CD mode is selected.

When the CS mode is selected, ECU 200 executes HV running with a higher priority than EV running, to control charge and discharge of battery 70 so that the SOC of battery 70 attains a target value.

When the SOC of battery 70 is smaller than the target value, for example, ECU 200 controls an output from engine 10, a torque of first MG 20 or a torque of second MG 30 so that charge power is greater than discharge power, while generating running power Ptrv corresponding to requested power Preq.

When the SOC of battery 70 is greater than the target value, for example, ECU 200 controls an output from engine 10, a torque of first MG 20 or a torque of second MG 30 so that running power Ptrv corresponding to requested power Preq of vehicle 1 is generated, while allowing discharge power to be greater than charge power. That is, engine 10 generates charge power for battery 70 and running power.

The target value of the SOC of battery 70 may be a constant value, or may be the SOC of battery 70 at a point in time when the CS mode was selected, or may be a value obtained by adding or subtracting a prescribed value to or from the SOC at the point in time when the CS mode was selected.

For example, when the CS mode is selected, and when a current value of the SOC of battery 70 is greater than an upper limit value of the SOC, ECU 200 may stop engine 10 and execute EV running.

Threshold value Preq(2) is greater than threshold value Preq(0) when the CS mode is selected, and is smaller than threshold value Preq(3) when the second CD mode is selected. Threshold value Preq(2) is a threshold value of requested power Preq for switching the running state between HV running and EV running when the first CD mode is selected.

Thus, when the first CD mode is selected, an area of requested power Preq where EV running is executed (between 0 and Preq(2)) is larger than the area when the CS mode is selected. When the first CD mode is selected, therefore, EV running is executed with a higher priority than when the CS mode is selected.

When the second CD mode is selected, an area of requested power Preq where EV running is executed (between 0 and Preq(3)) is larger than the area when the CS mode or the first CD mode is selected. When the second CD mode is selected, therefore, EV running is continued longer than when the first CD mode is selected.

When the first CD mode is selected and requested power Preq exceeds threshold value Preq(2), or when the second CD mode is selected and requested power Preq exceeds threshold value Preq(3), ECU 200 controls an output from engine 10, a torque of first MG 20 and a torque of second MG 30, with running power Ptrv corresponding to requested power Preq as shown in Fig. 2 as a target value.

When the first CD mode is selected and requested power Preq is equal to or smaller than threshold value Preq(2), or when the second CD mode is selected and requested power Preq is equal to or smaller than threshold value Preq(3), ECU 200 controls a torque of second MG 30, with running power Ptrv corresponding to requested power Preq as shown in Fig. 2 as a target value.

Furthermore, when the second CD mode is selected, ECU 200 reduces the target value of the running power corresponding to requested power Preq to a level lower than the level when the other running modes are selected. Thus, as shown at the bottom of Fig. 2, in a period between Preq(1) and Preq(3) of requested power Preq, the target value of running power Ptrv is limited to an upper limit value Ptrv(3). ECU 200 controls PCU 60 such that, for example, an upper limit value Wout of discharge power of battery 70 corresponding to upper limit value Ptrv(3) of running power Ptrv is not exceeded. That is, running power Ptrv is limited by limiting upper limit value Wout of the discharge power. By limiting running power Ptrv, heat generation and power consumption of PCU 60 can be reduced as compared to an example where the first CD mode is selected. As a result, a distance that can be run during EV running can be increased as compared to an example where the first CD mode is selected.

In vehicle 1 having the configuration as described above, when second switch 168 is operated by the occupant of vehicle 1 while the second CD mode is selected, for example, ECU 200 cancels the selection of the second CD mode and selects the first CD mode.

Due to the cancellation of the selection of the second CD mode, the limitation on the running power is canceled. Accordingly, the target value of running power Ptrv which is determined by requested power Preq may be varied.

For example, it is assumed that the occupant cancels the second CD mode by operating second switch 168, while keeping a constant stroke amount of accelerator pedal 162. At this time, requested power Preq is assumed to be Preq(5).

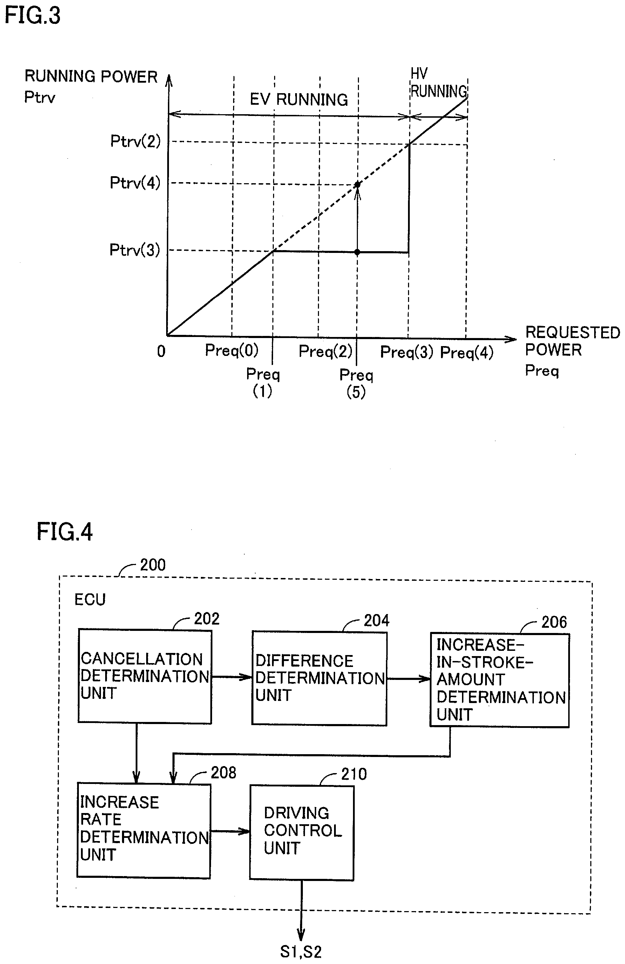

In this case, as shown in Fig. 3, when the second CD mode is canceled, the target value of running power Ptrv increases from target value Ptrv(3) of the running power corresponding to the second CD mode to a target value Ptrv(4) of the running power corresponding to requested power Preq(5) when the first CD mode is selected.

Thus, running power Ptrv of vehicle 1 increases despite the constant stroke amount of accelerator pedal 162. This may cause the occupant to feel uncomfortable with the occurrence of driving force variation not intended by the occupant.

In this embodiment, therefore, when the second CD mode is canceled, ECU 200 characteristically limits an increase rate of a physical amount related to driving and determined by a requested amount for driving.

Furthermore, in this embodiment, when more acceleration of vehicle 1 is requested while the increase rate of the physical amount is limited, ECU 200 relaxes the limitation on the increase rate.

Although the "requested amount for driving" is described as requested power Preq in this embodiment, it may be requested driving force required of vehicle 1, or stroke amount AP of accelerator pedal 162, for example.

Although the "physical amount related to driving" is described as running power Ptrv in this embodiment, it may be driving force of vehicle 1, for example.

Fig. 4 is a functional block diagram of ECU 200 incorporated in vehicle 1 according to this embodiment. ECU 200 includes a cancellation determination unit 202, a difference determination unit 204, an increase-in-stroke-amount determination unit 206, an increase rate determination unit 208, and a driving control unit 210.

Cancellation determination unit 202 determines whether or not the second CD mode has been canceled. Specifically, cancellation determination unit 202 determines that the second CD mode has been canceled when second switch 168 is operated while the second CD mode is selected. Alternatively, cancellation determination unit 202 determines that the second CD mode has been canceled when one of the first to sixth conditions describe above is satisfied.

Difference determination unit 204 determines whether or not there is a difference between a current value Ptrv' of running power Ptrv and a target value Ptrv_t of running power Ptrv. Difference determination unit 204 may calculate current value Ptrv' of running power Ptrv based on, for example, vehicle speed V, a torque command value Tm1 for first MG 20, a torque command value Tm2 for second MG 30, and engine power Pe. Difference determination unit 204 may calculate engine power Pe based on an opening degree of a throttle valve and an engine speed.

Difference determination unit 204 calculates target value Ptrv_t of running power Ptrv based on stroke amount AP of accelerator pedal 162, vehicle speed V, and the relation between requested power Preq and running power Ptrv when the first CD mode is selected as shown in the middle of Fig. 2.

Difference determination unit 204 determines that there is a difference between current value Ptrv' and target value Ptrv_t when, for example, an absolute value of the difference between current value Ptrv' and target value Ptrv_t is greater than a threshold value A.

When it is determined by cancellation determination unit 202 that the second CD mode has been canceled, and when it is determined that there is a difference between current value Ptrv' and target value Ptrv_t, difference determination unit 204 turns a limitation request flag ON.

When it is determined by cancellation determination unit 202 that the second CD mode has been canceled, and when it is determined by difference determination unit 204 that there is a difference between current value Ptrv' and target value Ptrv_t, increase-in-stroke-amount determination unit 206 determines whether or not a stroke amount of accelerator pedal 162 has been increased. Increase-in-stroke-amount determination unit 206 determines that the stroke amount of accelerator pedal 162 has been increased when, for example, the stroke amount has been increased by at least a threshold value B from the stroke amount at the point in time when the second CD mode was canceled.

Increase-in-stroke-amount determination unit 206 determines whether or not the stroke amount of accelerator pedal 162 has been increased when the limitation request flag is ON, and turns an increase-in-stroke-amount determination flag ON when it is determined that the stroke amount of accelerator pedal 162 has been increased. Increase-in-stroke-amount determination unit 206 turns the increase-in-stroke-amount determination flag OFF when the limitation request flag is OFF.

Increase rate determination unit 208 determines an increase rate ΔPtrv of running power Ptrv based on the results of determination from cancellation determination unit 202, difference determination unit 204 and increase-in-stroke-amount determination unit 206.

When it is determined by cancellation determination unit 202 that the second CD mode has been canceled, and when it is determined by difference determination unit 204 that there is a difference between current value Ptrv' and target value Ptrv_t, increase rate determination unit 208 determines a first rate ΔPtrv(1) as increase rate ΔPtrv. First rate ΔPtrv(1) is a value smaller than a normal value ΔPtrv(0) of increase rate ΔPtrv. Normal value ΔPtrv(0) is an increase rate which is determined when increase rate ΔPtrv is not limited. A case where increase rate ΔPtrv is not limited includes a case where it is not determined that the second CD mode has been canceled, or a case where it is determined that the second CD mode has been canceled and there is not a difference between current value Ptrv' and target value Ptrv_t.

Increase rate determination unit 208 may determine first rate ΔPtrv(1) as increase rate ΔPtrv when, for example, the limitation request flag is ON and the increase-in-stroke-amount determination flag is OFF.

According to the invention, increase rate determination unit 208 determines increase rate ΔPtrv based on vehicle speed V. When vehicle speed V is low, increase rate determination unit 208 may determine increase rate ΔPtrv such that increase rate ΔPtrv has a value greater than a value when vehicle speed V is high.

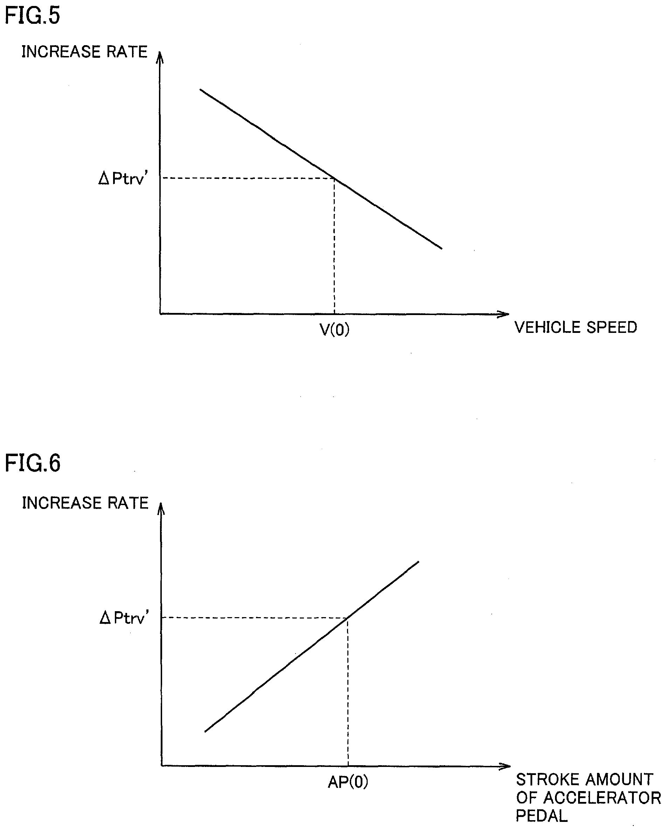

Increase rate determination unit 208 may determine increase rate ΔPtrv using a map shown in Fig. 5, for example. The abscissa of Fig. 5 represents vehicle speed V. The ordinate of Fig. 5 represents increase rate ΔPtrv. As shown in Fig. 5, vehicle speed V and increase rate ΔPtrv have proportional relation to each other, with increase rate ΔPtrv decreasing as vehicle speed V increases.

It is noted that the relation between vehicle speed V and increase rate ΔPtrv is not limited to the proportional relation, but may be nonlinear relation where increase rate ΔPtrv tends to decrease as vehicle speed V increases.

When vehicle speed V is V(0), for example, increase rate determination unit 208 may determine increase rate ΔPtrv' based on the map shown in Fig. 5. Increase rate determination unit 208 determines increase rate ΔPtrv, with normal value APtrv(0) as an upper limit value.

Although not part of the present invention, the increase rate determination unit 208 may determine increase rate ΔPtrv based on stroke amount AP of accelerator pedal 162 instead of vehicle speed V. When stroke amount AP of accelerator pedal 162 is great, increase rate determination unit 208 may determine increase rate ΔPtrv such that increase rate ΔPtrv has a value greater than a value when stroke amount AP of accelerator pedal 162 is small.

Increase rate determination unit 208 may determine increase rate ΔPtrv using a map shown in Fig. 6, for example. The abscissa of Fig. 6 represents stroke amount AP of accelerator pedal 162. The ordinate of Fig. 6 represents increase rate ΔPtrv. As shown in Fig. 6, stroke amount AP of accelerator pedal 162 and increase rate ΔPtrv have proportional relation to each other, with increase rate ΔPtrv increasing as stroke amount AP of accelerator pedal 162 increases.

It is noted that the relation between stroke amount AP of accelerator pedal 162 and increase rate ΔPtrv is not limited to the proportional relation, but may be nonlinear relation where increase rate ΔPtrv tends to increase as stroke amount AP of accelerator pedal 162 increases.

When stroke amount AP of accelerator pedal 162 is AP(0), for example, increase rate determination unit 208 may determine increase rate ΔPtrv' based on the map shown in Fig. 6.

When the second CD mode has been canceled and a stopped state of engine 10 is maintained, for example, increase rate determination unit 208 may determine increase rate ΔPtrv such that increase rate ΔPtrv has a value greater than a value when engine 10 is started.

After first rate ΔPtrv(1) is determined (namely, after it is determined that the second CD mode has been canceled and it is determined that there is a difference between current value Ptrv' and target value Ptrv_t), when the stroke amount of accelerator pedal 162 is increased, increase rate determination unit 208 determines a second rate ΔPtrv(2) as increase rate ΔPtrv of running power Ptrv. Second rate ΔPtrv(2) is a value greater than first rate ΔPtrv(1). Second rate ΔPtrv(2) may be the same value as normal value ΔPtrv(0), or may be a value smaller than normal value ΔPtrv(0).

Increase rate determination unit 208 may determine second rate ΔPtrv(2) as increase rate ΔPtrv when, for example, the limitation request flag is ON and the increase-in-stroke-amount determination flag is changed from an OFF state to an ON state.

Driving control unit 210 controls running power Ptrv of vehicle 1 based on increase rate ΔPtrv determined by increase rate determination unit 208. Specifically, driving control unit 210 determines a new target value Ptrv_t(n) by adding a target value increase based on increase rate ΔPtrv to a target value determined in the previous calculation cycle (hereinafter referred to as a pervious target value Ptrv_t(n-1)). An initial value of the target value may be the target value of running power Ptrv at the point in time when the second CD mode was canceled, or current value Ptrv' of running power Ptrv at the point in time when the second CD mode was canceled.

When increase rate ΔPtrv is an increaser rate per calculation cycle time, for example, driving control unit 210 may determine a target value increase ΔPtrv_t as increase rate ΔPtrv. When increase rate ΔPtrv is an increase rate per unit time, for example, driving control unit 210 may determine a value obtained by multiplying increase rate ΔPtrv by a sample time as target value increase ΔPtrv_t.

Driving control unit 210 repeats the calculation for determining new target value Ptrv_t(n) until new target value Ptrv_t(n) matches target value Ptrv_t of running power Ptrv which is determined by requested power Preq when the first CD mode is selected.

Driving control unit 210 controls vehicle 1 such that running power Ptrv has newly determined target value Ptrv_t(n).

During EV running, for example, driving control unit 210 may determine torque command values Tm1 and Tm2 for first MG 20 and second MG 30 based on the difference between current value Ptrv' and new target value Ptrv_t(n) of running power Ptrv. Driving control unit 210 may output control signal S2 generated based on determined torque command values Tm1 and Tm2 to PCU 60.

During HV running, for example, driving control unit 210 may determine torque command values Tm1 and Tm2 for first MG 20 and second MG 30 as well as requested power Pe for engine 10 based on the difference between current value Ptrv' and new target value Ptrv_t(n) of running power Ptrv. Driving control unit 210 may output control signal S1 generated based on determined requested power Pe to engine 10, and output control signal S2 generated based on determined torque command values Tm1 and Tm2 to PCU 60.

Although cancellation determination unit 202, difference determination unit 204, increase-in-stroke-amount determination unit 206, increase rate determination unit 208 and driving control unit 210 are all described as having the function of software implemented when a CPU in ECU 200 executes a program stored in a memory in this embodiment, they may be implemented as hardware. Such a program is recorded on a recording medium and incorporated in the vehicle.

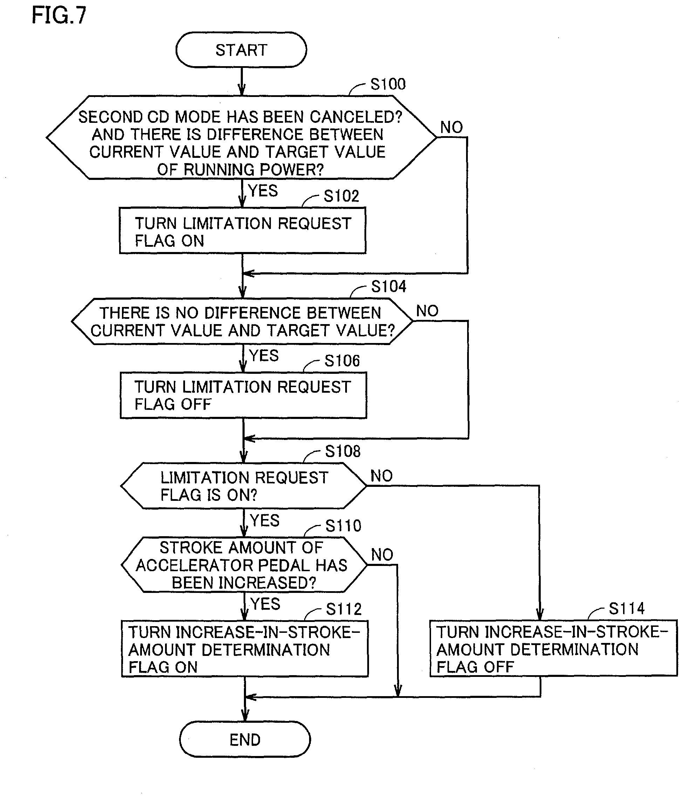

Referring to Fig. 7, the control structure of a program executed by ECU 200 incorporated in vehicle 1 according to this embodiment is described.

In step (hereinafter referred to as S) 100, ECU 200 determines whether or not the second CD mode has been canceled and whether or not there is a difference between current value Ptrv' and target value Ptrv_t. A method of determining whether or not there is a difference is as described above, and thus detailed description thereof will not be repeated. If it is determined that the second CD mode has been canceled and that there is a difference between current value Ptrv' and target value Ptrv_t (YES in S100), the process proceeds to S102. If not (NO in S100), the process proceeds to S104.

In S102, ECU 200 turns the limitation request flag ON. In S104, ECU 200 determines whether or not there is not a difference between current value Ptrv' and target value Ptrv_t (namely, whether or not an absolute value of the difference between current value Ptrv' and target value Ptrv_t is equal to or smaller than a threshold value). If it is determined that there is not a difference between current value Ptrv' and target value Ptrv_t (YES in S104), the process proceeds to S106. If not (NO in S104), the process proceeds to S108. In S106, ECU 200 turns the limitation request flag OFF.

In S108, ECU 200 determines whether or not the limitation request flag is ON. If the limitation request flag is ON (YES in S108), the process proceeds to S110. If not (NO in S108), the process proceeds to S114.

In S110, ECU 200 determines whether or not a stroke amount of the accelerator pedal has been increased. A method of determining whether or not the stroke amount of the accelerator pedal has been increased is as described above, and thus detailed description thereof will not be repeated. If it is determined that the stroke amount of the accelerator pedal has been increased (YES in S110), the process proceeds to S112. If not (NO in S110), the process ends. In S112, ECU 200 turns the increase-in-stroke-amount determination flag ON. In S114, ECU 200 turns the increase-in-stroke-amount determination flag OFF.

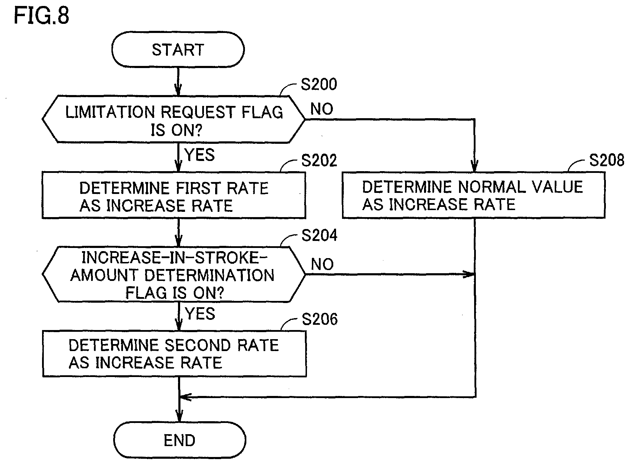

Referring now to Fig. 8, the control structure of a program for determining increase rate ΔPtrv, which is executed by ECU 200 incorporated in vehicle 1 according to this embodiment, is described.

In S200, ECU 200 determines whether or not the limitation request flag is ON. If the limitation request flag is ON (YES in S200), the process proceeds to S202. If not (NO in S200), the process proceeds to S208.

In S202, ECU 200 determines first rate ΔPtrv(1) as increase rate ΔPtrv. In S204, ECU 200 determines whether or not the increase-in-stroke-amount determination flag is ON. If the increase-in-stroke-amount determination flag is ON (YES in S204), the process proceeds to S206. If not (NO in S204), the process ends.

In S206, ECU 200 determines second rate ΔPtrv(2) as increase rate ΔPtrv. In S208, ECU 200 determines normal value APtrv(0) as increase rate ΔPtrv.

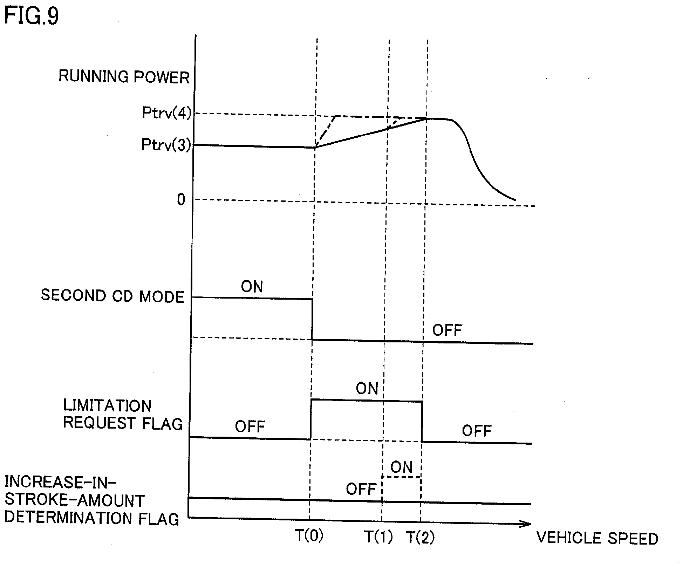

The operation of ECU 200 incorporated in the vehicle according to this embodiment based on the above structures and flowcharts is described with reference to Fig. 9.

As shown in Fig. 9, it is assumed that the second CD mode is selected and stroke amount AP of accelerator pedal 162 is constant, for example. Since stroke amount AP of accelerator pedal 162 is constant, requested power Preq is constant at Preq (5).

Here, target value Ptrv_t of running power Ptrv is limited with Ptrv(3) as an upper limit value as shown in Fig. 3. Both of the limitation request flag and the increase-in-stroke-amount determination flag are OFF.

While the second CD mode is selected (NO in S100), the limitation request flag is maintained in an OFF state (NO in S108). Thus, the increase-in-stroke-amount determination flag is also maintained in an OFF state (S114). Since the limitation request flag is OFF (NO in S200), normal value ΔPtrv(0) is determined as increase rate ΔPtrv of running power Ptrv (S208).

When the occupant of vehicle 1 cancels the second CD mode by operating second switch 168 at time T(0), the first CD mode is selected. Thus, target value Ptrv_t of running power Ptrv corresponding to requested power Preq (5) in the first CD mode becomes Ptrv(4). When an absolute value of the difference between current value Ptrv' and target value Ptrv(4) is greater than threshold value A (YES in S100), the limitation request flag is switched from an OFF state to an ON state (S102).

Since the limitation request flag is ON (YES in S200), first rate ΔPtrv(1) is determined as increase rate ΔPtrv of running power Ptrv (S202). Thus, as indicated with a solid line in Fig. 9, running power Ptrv increases toward target value Ptrv(4) more gradually than when normal value ΔPtrv(0) is determined as the increase rate (a chain-dotted line in Fig. 9).

When the absolute value of the difference between current value Ptrv' and target value Ptrv(4) becomes equal to or smaller than the threshold value and thus the difference is resolved at time T(2) (NO in S100 and YES in S104), the limitation request flag is switched from an ON state to an OFF state (S106).

Since the limitation request flag is OFF (YES in S200), increase rate ΔPtrv is recovered to normal value ΔPtrv(0) (S208).

When there is a difference between current value Ptrv' and target value Ptrv(4) (YES in S104) and the limitation request flag is ON (S108), on the other hand, it is determined whether or not a stroke amount of accelerator pedal 162 has been increased (S110). When the stroke amount of accelerator pedal 162 has not been increased (NO in S110), the state (OFF state) of the increase-in-stroke-amount determination flag is maintained.

When it is determined at time T(1) that the stroke amount of accelerator pedal 162 has been increased (YES in S110), the increase-in-stroke-amount determination flag is turned ON at time T(1) as indicated with a thick broken line in Fig. 9 (S112).

Even if the limitation request flag is ON (YES in S200) and first rate ΔPtrv(1) is determined as increase rate ΔPtrv (S202), when the increase-in-stroke-amount determination flag is turned ON, second rate ΔPtrv(2) is determined as increase rate ΔPtrv instead of first rate ΔPtrv(1) (S206). When second rate ΔPtrv(2) is determined as the increase rate, running power Ptrv increases to target value Ptrv(4) more quickly than when first rate ΔPtrv(1) is determined as the increase rate. Although not shown in Fig. 9, when a second rate ΔPtrv(2) is determined as the increase rate, the difference between current value Ptrv' and target value Ptrv(4) is resolved prior to time T(2), causing the limitation request flag and the increase-in-stroke-amount determination flag to be turned OFF prior to time T(2).

As described above, according to the vehicle of this embodiment, when the second CD mode has been canceled and there is a difference between current value Ptrv' of running power Ptrv and target value Ptrv_t of running power Ptrv after the cancellation of the second CD mode which is determined by requested power Preq, first rate ΔPtrv(1) is determined as increase rate ΔPtrv of running power Ptrv. Thus, running power Ptrv after the cancellation of the second CD mode varies more gradually than when it varies in accordance with normal value ΔPtrv(0). As such, driving force variation can be suppressed to prevent the occupant from feeling uncomfortable with the behavior of the vehicle. Therefore, a vehicle in which driving force variation not intended by an occupant is suppressed when limitation on the driving force is canceled, and a method of controlling the vehicle can be provided.

In addition, when the stroke amount of accelerator pedal 162 is increased while increase rate ΔPtrv is limited, the limitation on the increase rate is relaxed to thereby satisfy an acceleration request from the occupant with a quick response.

Furthermore, increase rate ΔPtrv is increased as vehicle speed V decreases, to thereby suppress consumption of the power of engine 10 as generated power. Thus, overcharging of battery 70 can be suppressed.

Although the increase rate of running power Ptrv is described as not being limited when the selection of the second CD mode is canceled due to the satisfaction of the seventh condition out of the prescribed cancellation conditions in this embodiment, when a shift lever is in a reverse drive position, for example, increase rate ΔPtrv may be limited when the selection of the second CD mode is canceled due to the satisfaction of the seventh condition. As such, driving force variation not intended by the occupant can be suppressed during reverse driving of the vehicle.

It is noted that vehicles to which the present invention is applied are not limited to the hybrid vehicle shown in Fig. 1. For example, vehicle 1 may be an electrically-powered vehicle.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### REFERENCE SIGNS LIST

1 hybrid vehicle; 10 engine; 11 engine rotational speed sensor; 12, 13 resolver; 14 wheel speed sensor; 16 rotation shaft; 18 crankshaft; 20, 30 MG; 40 power split device; 50 sun gear; 52 pinion gear; 54 carrier; 56 ring gear; 58 reduction gear; 60 PCU; 70 battery; 78 charging device; 80 drive wheel; 82 drive shaft; 102 cylinder; 104 fuel injection device; 150 display device; 152 switching operation device; 156 battery temperature sensor; 158 current sensor; 160 voltage sensor; 162 accelerator pedal; 164 pedal stroke sensor; 166, 168 switch; 200 ECU; 202 cancellation determination unit; 204 difference determination unit; 206 increase-in-stroke-amount determination unit; 208 increase rate determination unit; 210 driving control unit; 300 charging plug; 302 external power supply; 304 charging cable.

## Claims

1. A vehicle comprising:
a rotating electric machine (30) for driving the vehicle (1);
a power storage device (70) for supplying electric power to said rotating electric machine (30); and
a control device (200) for controlling said vehicle (1), when a prescribed running mode out of a plurality of running modes is selected, such that a physical amount related to driving and determined by a requested amount for driving is limited further than when a running mode other than said prescribed mode is selected,
said control device (200) limiting an increase rate (ΔPtrv) of said physical amount when the selection of said prescribed running mode is canceled,
said requested amount for driving being one of a stroke amount of an accelerator pedal (162), requested driving force required of said vehicle (1), and requested power required of said vehicle (1),
said physical amount being one of driving force of said vehicle (1) and running power of said vehicle (1),
said control device (200) cancels said prescribed running mode when at least one of a first cancellation condition of an increase in a stroke amount of the accelerator pedal (162) and a second cancellation condition different from said first cancellation condition is satisfied, relaxes the limitation on said increase rate when said first cancellation condition is satisfied, and limits said increase rate when said second cancellation condition is satisfied,
**characterized in that** said control device (200), when a speed (V) of said vehicle is low, determines said increase rate (ΔPtrv) such that said increase rate (ΔPtrv) has a value greater than a value when said speed (V) is high.

2. The vehicle according to claim 1, wherein
said control device (200) limits said increase rate (ΔPtrv) of said physical amount when an absolute value of a difference between a current value of said physical amount and a target value of said physical amount after the cancellation of the selection of said prescribed running mode is greater than a threshold value, in addition to when the selection of said prescribed running mode is canceled.

3. The vehicle according to claim 1, further comprising a power generator (20) for charging said power storage device (70), and an internal combustion engine (10) serving as a power source of said power generator (20) and as a driving source of said vehicle (1), wherein
when a stopped state of said internal combustion engine is maintained, said control device (200) determines said increase rate (ΔPtrv) such that said increase rate (ΔPtrv) has a value greater than a value when said internal combustion engine (10) is started.

4. The vehicle according to claim 1, wherein
said control device (200) limits said increase rate (ΔPtrv) when a shift position is a reverse drive position, even if said first cancellation condition is satisfied.

5. The vehicle according to claim 1, wherein
said second cancellation condition includes at least one of a condition that operation of canceling said prescribed running mode has been received, a condition that a speed of said vehicle (1) is higher than a threshold value, a condition that a state of charge of said power storage device (70) is smaller than a threshold value, a condition that a temperature of said power storage device (70) is out of a prescribed range, and a condition that heating has been requested.

6. The vehicle according to claim 1, further comprising a power generator (20) for charging said power storage device (70), and an internal combustion engine (10) serving as a power source of said power generator (20) and as a driving source of said vehicle (1), wherein
said second cancellation condition includes at least one of a condition that operation of canceling said prescribed running mode has been received, a condition that a speed (V) of said vehicle is higher than a threshold value, a condition that a state of charge of said power storage device (70) is smaller than a threshold value, a condition that a temperature of said power storage device (70) is out of a prescribed range, a condition that heating has been requested, a condition that said internal combustion engine (10) is in operation, and a condition that warm-up of said internal combustion engine (10) has been requested.

7. The vehicle according to claim 1, wherein
said control device (200) relaxes the limitation on said increase rate (ΔPtrv) when acceleration of said vehicle (1) is requested while said increase rate (ΔPtrv) is limited.

8. The vehicle according to claim 1, further comprising a power generator (20) for charging said power storage device (70), and an internal combustion engine (10) serving as a power source of said power generator (20) and as a driving source of said vehicle (1), wherein
said plurality of running modes include a first running mode in which said vehicle (1) is controlled under execution conditions for preferentially executing EV running control of running said vehicle (1) while maintaining said internal combustion engine in a stopped state, a second running mode in which said EV running control is continued longer than when said first running mode is selected, and a third running mode in which said vehicle (1) is controlled under execution conditions for preferentially executing control of running said vehicle while maintaining said internal combustion engine in an operation state, and
said prescribed running mode is said second running mode.

9. A method of controlling a vehicle (1) including a rotating electric machine (30) for driving said vehicle and a power storage device (70) for supplying electric power to said rotating electric machine (30), comprising the steps of:
controlling said vehicle (1), when a prescribed running mode out of a plurality of running modes is selected, such that a physical amount related to driving and determined by a requested amount for driving is limited further than a running mode other than said prescribed mode is selected; and
limiting an increase rate (ΔPtrv) of said physical amount when the selection of said prescribed running mode is canceled,
said requested amount for driving being one of a stroke amount of an accelerator pedal (162), requested driving force required of said vehicle, and requested power required of said vehicle (1),
said physical amount being one of driving force of said vehicle (1) and running power of said vehicle (1),
canceling said prescribed running mode when at least one of a first cancellation condition of an increase in a stroke amount of the accelerator pedal (162) and a second cancellation condition different from said first cancellation condition is satisfied;
relaxing the limitation on said increase rate (ΔPtrv) when said first cancellation condition is satisfied;
limiting said increase rate (ΔPtrv) when said second cancellation condition is satisfied; **characterized in that** said method further comprises the step of
determining a value of said increase rate when a speed (V) of said vehicle is low, the value being greater than a value of said increase rate when said speed (V) is high.

## Patentansprüche

1. Fahrzeug, das Folgendes umfasst:
eine drehende Elektromaschine (30), um das Fahrzeug (1) anzutreiben;
eine Energiespeichervorrichtung (70), um der drehenden Elektromaschine (30) elektrische Leistung zuzuführen; und
eine Steuervorrichtung (200), um das Fahrzeug (1) zu steuern, wenn ein vorgegebener Fahrtmodus aus mehreren Fahrtmodi gewählt ist, derart, dass eine physikalischer Betrag, der in Beziehung zum Antreiben steht und durch einen angeforderten Betrag zum Antreiben bestimmt wird, weiter beschränkt wird als wenn ein Fahrtmodus mit Ausnahme des vorgegebenen Modus gewählt ist, wobei
die Steuervorrichtung (200) eine Anstiegsrate (ΔPtrv) des physikalischen Betrags beschränkt, wenn die Auswahl des vorgegebenen Fahrtmodus abgebrochen wird,
der angeforderte Betrag zum Antreiben ein Hubbetrag eines Fahrpedals (162), eine angeforderte Antriebskraft des Fahrzeugs (1) oder eine angeforderte Leistung, die vom Fahrzeug (1) gefordert wird, ist,
der physikalische Betrag eine Antriebskraft des Fahrzeugs (1) oder eine Fahrtleistung des Fahrzeugs (1) ist und
die Steuervorrichtung (200) den vorgegebenen Fahrtmodus aufhebt, wenn eine erste Aufhebungsbedingung eines Anstiegs eines Hubbetrags des Fahrpedals (162) und/oder eine zweite Aufhebungsbedingung, die von der ersten Aufhebungsbedingung verschieden ist, erfüllt ist, die Beschränkung der Anstiegsrate lockert, wenn die erste Aufhebungsbedingung erfüllt ist, und die Anstiegsrate beschränkt, wenn die zweite Aufhebungsbedingung erfüllt ist,
**dadurch gekennzeichnet, dass** die Steuervorrichtung (200) dann, wenn eine Geschwindigkeit (V) des Fahrzeugs niedrig ist, die Anstiegsrate (ΔPtrv) derart bestimmt, dass die Anstiegsrate (ΔPtrv) einen Wert besitzt, der größer als der Wert ist, wenn die Geschwindigkeit (V) hoch ist.

2. Fahrzeug nach Anspruch 1, wobei
die Steuervorrichtung (200) die Anstiegsrate (ΔPtrv) des physikalischen Betrags zusätzlich zu dem Fall, in dem die Auswahl des vorgegebenen Fahrtmodus abgebrochen wird, beschränkt, wenn ein Betragswert einer Differenz zwischen einem Istwert des physikalischen Betrags und einem Sollwert des physikalischen Betrags nach der Aufhebung der Auswahl des vorgegebenen Fahrtmodus größer als ein Schwellenwert ist.

3. Fahrzeug nach Anspruch 1, das ferner einen Leistungsgenerator (20), um die Energiespeichervorrichtung (70) zu laden, und eine Brennkraftmaschine (10), die als eine Leistungsquelle des Leistungsgenerators (20) und als eine Antriebsquelle des Fahrzeugs (1) dient, umfasst, wobei
dann, wenn ein angehaltener Zustand der Brennkraftmaschine aufrechterhalten wird, die Steuervorrichtung (200) die Anstiegsrate (ΔPtrv) derart bestimmt, dass die Anstiegsrate (ΔPtrv) einen Wert besitzt, der größer als ein Wert ist, wenn die Brennkraftmaschine (10) gestartet wird.

4. Fahrzeug nach Anspruch 1, wobei
die Steuervorrichtung (200) die Anstiegsrate (ΔPtrv) beschränkt, wenn eine Schaltposition eine Rückwärtsfahrtposition ist, selbst wenn die erste Aufhebungsbedingung erfüllt ist.

5. Fahrzeug nach Anspruch 1, wobei
die zweite Aufhebungsbedingung eine Bedingung, dass ein Vorgang des Aufhebens des vorgegebene Fahrtmodus empfangen worden ist, eine Bedingung, dass eine Geschwindigkeit des Fahrzeugs (1) höher als ein Schwellenwert ist, eine Bedingung, dass ein Ladezustand der Energiespeichervorrichtung (70) geringer als ein Schwellenwert ist, eine Bedingung, dass eine Temperatur der Energiespeichervorrichtung (70) außerhalb eines vorgegebenen Bereichs liegt, und/oder eine Bedingung, dass ein Erwärmen angefordert worden ist, enthält.

6. Fahrzeug nach Anspruch 1, das ferner einen Leistungsgenerator (20) zum Laden der Energiespeichervorrichtung (70) und eine Brennkraftmaschine (10), die als eine Leistungsquelle des Leistungsgenerators (20) und als eine Antriebsquelle des Fahrzeugs (1) dient, umfasst, wobei
die zweite Aufhebungsbedingung eine Bedingung, dass ein Vorgang des Aufhebens des vorgegebenen Fahrtmodus empfangen worden ist, eine Bedingung, dass eine Geschwindigkeit (V) des Fahrzeugs höher als ein Schwellenwert ist, eine Bedingung, dass ein Ladezustand der Energiespeichervorrichtung (70) geringer als ein Schwellenwert ist, eine Bedingung, dass eine Temperatur der Energiespeichervorrichtung (70) außerhalb eines vorgegebenen Bereichs liegt, eine Bedingung, dass ein Erwärmen angefordert worden ist, eine Bedingung, dass die Brennkraftmaschine (10) in Betrieb ist, und/oder eine Bedingung, dass ein Aufwärmen der Brennkraftmaschine (10) angefordert worden ist, enthält.

7. Fahrzeug nach Anspruch 1, wobei
die Steuervorrichtung (200) die Beschränkung der Anstiegsrate (ΔPtrv) lockert, wenn eine Beschleunigung des Fahrzeugs (1) angefordert wird, während die Anstiegsrate (ΔPtrv) beschränkt ist.

8. Fahrzeug nach Anspruch 1, das ferner einen Leistungsgenerator (20) zum Laden der Energiespeichervorrichtung (70) und eine Brennkraftmaschine (10), die als eine Leistungsquelle des Leistungsgenerators (20) und als eine Antriebsquelle des Fahrzeugs (1) dient, umfasst, wobei
die mehreren Fahrtmodi einen ersten Fahrtmodus, in dem das Fahrzeug (1) unter Ausführungsbedingungen zum bevorzugten Ausführen einer EV-Fahrtsteuerung des Fahrens des Fahrzeugs (1) gesteuert wird, während die Brennkraftmaschine in einem angehaltenen Zustand gehalten wird, einen zweiten Fahrtmodus, in dem die EV-Fahrtsteuerung länger fortgesetzt wird, als wenn der erste Fahrtmodus gewählt ist, und einen dritten Fahrtmodus, in dem das Fahrzeug (1) unter Ausführungsbedingungen zum bevorzugten Ausführen einer Steuerung des Fahrens des Fahrzeugs, während sich die Brennkraftmaschine in einem Betriebszustand befindet, gesteuert wird, enthalten, und
der vorgegebene Fahrtmodus der zweite Fahrtmodus ist.

9. Verfahren zum Steuern eines Fahrzeugs (1), das eine drehende Elektromaschine (30), um das Fahrzeug anzutreiben, und eine Energiespeichervorrichtung (70), um der drehenden Elektromaschine (30) elektrische Leistung zuzuführen, enthält, das die folgenden Schritte umfasst:
Steuern des Fahrzeugs (1), wenn ein vorgegebener Fahrtmodus aus mehreren Fahrtmodi gewählt ist, derart, dass eine physikalischer Betrag, der in Beziehung mit dem Antreiben steht und durch einen angeforderten Betrag zum Antreiben bestimmt wird, weiter beschränkt wird, als wenn ein Fahrtmodus außer dem vorgegebenen Modus gewählt ist;
Beschränken einer Anstiegsrate (ΔPtrv) des physikalischen Betrags, wenn die Auswahl des vorgegebenen Fahrtmodus abgebrochen wird, wobei
der angeforderte Betrag zum Antreiben ein Hubbetrag eines Fahrpedals (162), eine angeforderte Antriebskraft des Fahrzeugs oder eine angeforderte Leistung, die vom Fahrzeug (1) gefordert wird, ist und
der physikalische Betrag eine Antriebskraft des Fahrzeugs (1) oder eine Fahrtleistung des Fahrzeugs (1) ist;
Aufheben des vorgegebenen Fahrtmodus, wenn eine erste Aufhebungsbedingung eines Anstiegs eines Hubbetrags des Fahrpedals (162) und/oder eine zweite Aufhebungsbedingung, die von der ersten Aufhebungsbedingung verschieden ist, erfüllt ist;
Lockern der Beschränkung der Anstiegsrate (ΔPtrv), wenn die erste Aufhebungsbedingung erfüllt ist;
Beschränken der Anstiegsrate (ΔPtrv), wenn die zweite Aufhebungsbedingung erfüllt ist;
**dadurch gekennzeichnet, dass** das Verfahren ferner den folgenden Schritt umfasst:
Bestimmen eines Werts der Anstiegsrate, wenn eine Geschwindigkeit (V) des Fahrzeugs niedrig ist, wobei der Wert größer als ein Wert der Anstiegsrate ist, wenn die Geschwindigkeit (V) hoch ist.

## Revendications

1. Véhicule, comprenant :
une machine électrique rotative (30) destinée à entraîner le véhicule (1) ;
un dispositif de stockage d'énergie (70) destiné à alimenter en énergie électrique ladite machine électrique rotative (30) ; et
un dispositif de commande (200) destiné à commander ledit véhicule (1) lorsqu'un mode de marche prescrit parmi une pluralité de modes de marche est sélectionné, de façon à limiter une grandeur physique, liée à l'entraînement et déterminée par une grandeur sollicitée pour l'entraînement, davantage que lorsqu'un mode de marche autre que ledit mode de marche prescrit est sélectionné,
ledit dispositif de commande (200) limitant un taux d'accroissement (ΔPtrv) de ladite grandeur physique lorsque la sélection dudit mode de marche prescrit est annulée,
ladite grandeur sollicitée pour l'entraînement consistant soit en une grandeur de course d'une pédale d'accélérateur (162), soit en une force d'entraînement sollicitée requise dudit véhicule (1), soit en une énergie sollicitée requise dudit véhicule (1),
ladite grandeur physique consistant soit en une force d'entraînement dudit véhicule (1), soit en une énergie de marche dudit véhicule (1),
ledit dispositif de commande (200) annulant ledit mode de marche prescrit lorsqu'une première condition d'annulation d'un accroissement d'une grandeur de course de la pédale d'accélérateur (162) et/ou une deuxième condition d'annulation, différente de ladite première condition d'annulation, sont/est satisfaites/satisfaite, assouplissant la limitation imposée audit taux d'accroissement lorsque ladite première condition d'annulation est satisfaite et limitant ledit taux d'accroissement lorsque ladite deuxième condition d'annulation est satisfaite,
**caractérisé en ce que**
ledit dispositif de commande (200), lorsqu'une vitesse (V) dudit véhicule est faible, détermine ledit taux d'accroissement (ΔPtrv) de telle sorte que ledit taux d'accroissement (ΔPtrv) prenne une valeur supérieure à une valeur lorsque ladite vitesse (V) est élevée.

2. Véhicule selon la revendication 1, dans lequel
ledit dispositif de commande (200) limite ledit taux d'accroissement (ΔPtrv) de ladite grandeur physique lorsqu'une valeur absolue d'une différence entre une valeur actuelle de ladite grandeur physique et une valeur cible de ladite grandeur physique suite à l'annulation de la sélection dudit mode de marche prescrit est supérieure à une valeur seuil, outre lorsque la sélection dudit mode de marche prescrit est annulée.

3. Véhicule selon la revendication 1, comprenant en outre un générateur d'énergie (20) destiné à charger ledit dispositif de stockage d'énergie (70), et un moteur à combustion interne (10) servant de source d'énergie dudit générateur d'énergie (20) et de source d'entraînement dudit véhicule (1),
lors du maintien d'un état d'arrêt dudit moteur à combustion interne, ledit dispositif de commande (200) déterminant ledit taux d'accroissement (ΔPtrv) de telle sorte que ledit taux d'accroissement (ΔPtrv) prenne une valeur supérieure à une valeur lors du démarrage dudit moteur à combustion interne (10).

4. Véhicule selon la revendication 1, dans lequel
ledit dispositif de commande (200) limite ledit taux d'accroissement (ΔPtrv) lorsqu'une position de changement de vitesse est une position de marche arrière, même si ladite première condition d'annulation est satisfaite.

5. Véhicule selon la revendication 1, dans lequel
ladite deuxième condition d'annulation comporte une condition qu'une opération d'annulation dudit mode de marche prescrit a été reçue et/ou une condition qu'une vitesse dudit véhicule (1) est supérieure à une valeur seuil et/ou une condition qu'un état de charge dudit dispositif de stockage d'énergie (70) est inférieur à une valeur seuil et/ou une condition qu'une température dudit dispositif de stockage d'énergie (70) sort d'une plage prescrite et/ou une condition qu'un chauffage a été sollicité.

6. Véhicule selon la revendication 1, comprenant en outre un générateur d'énergie (20) destiné à charger ledit dispositif de stockage d'énergie (70), et un moteur à combustion interne (10) servant de source d'énergie dudit générateur d'énergie (20) et de source d'entraînement dudit véhicule (1),
ladite deuxième condition d'annulation comportant une condition qu'une opération d'annulation dudit mode de marche prescrit a été reçue et/ou une condition qu'une vitesse (V) dudit véhicule est supérieure à une valeur seuil et/ou une condition qu'un état de charge dudit dispositif de stockage d'énergie (70) est inférieur à une valeur seuil et/ou une condition qu'une température dudit dispositif de stockage d'énergie (70) sort d'une plage prescrite et/ou une condition qu'un chauffage a été sollicité et/ou une condition que ledit moteur à combustion interne (10) est en fonctionnement et/ou une condition qu'une mise en température dudit moteur à combustion interne (10) a été sollicitée.

7. Véhicule selon la revendication 1, dans lequel
ledit dispositif de commande (200) assouplit la limitation imposée audit taux d'accroissement (ΔPtrv) lorsqu'une accélération dudit véhicule (1) est sollicitée alors que ledit taux d'accroissement (ΔPtrv) est limité.

8. Véhicule selon la revendication 1, comprenant en outre un générateur d'énergie (20) destiné à charger ledit dispositif de stockage d'énergie (70), et un moteur à combustion interne (10) servant de source d'énergie dudit générateur d'énergie (20) et de source d'entraînement dudit véhicule (1),
ladite pluralité de modes de marche comportant un premier mode de marche dans lequel ledit véhicule (1) est commandé conformément à des conditions d'exécution pour l'exécution préférentielle d'une commande de marche EV pour la marche dudit véhicule (1) tandis que ledit moteur à combustion interne est maintenu dans un état d'arrêt, un deuxième mode de marche dans lequel ladite commande de marche EV se poursuit plus longtemps que lorsque ledit premier mode de marche est sélectionné, et un troisième mode de marche dans lequel ledit véhicule (1) est commandé conformément à des conditions d'exécution pour l'exécution préférentielle d'une commande de marche dudit véhicule tandis que ledit moteur à combustion interne est maintenu dans un état de fonctionnement, et
ledit mode de marche prescrit consistant en ledit deuxième mode de marche.

9. Procédé de commande d'un véhicule (1) comportant une machine électrique rotative (30) destinée à entraîner ledit véhicule et un dispositif de stockage d'énergie (70) destiné à alimenter en énergie électrique ladite machine électrique rotative (30), comprenant les étapes de :
commande dudit véhicule (1) lorsqu'un mode de marche prescrit parmi une pluralité de modes de marche est sélectionné, de façon à limiter une grandeur physique, liée à l'entraînement et déterminée par une grandeur sollicitée pour l'entraînement, davantage que lorsqu'un mode de marche autre que ledit mode de marche prescrit est sélectionné ; et
limitation d'un taux d'accroissement (ΔPtrv) de ladite grandeur physique lorsque la sélection dudit mode de marche prescrit est annulée,
ladite grandeur sollicitée pour l'entraînement consistant soit en une grandeur de course d'une pédale d'accélérateur (162), soit en une force d'entraînement sollicitée requise dudit véhicule, soit en une énergie sollicitée requise dudit véhicule (1),
ladite grandeur physique consistant soit en une force d'entraînement dudit véhicule (1), soit en une énergie de marche dudit véhicule (1),
annulation dudit mode de marche prescrit lorsqu'une première condition d'annulation d'un accroissement d'une grandeur de course de la pédale d'accélérateur (162) et/ou une deuxième condition d'annulation, différente de ladite première condition d'annulation, sont/est satisfaites/satisfaite;
assouplissement de la limitation imposée audit taux d'accroissement (ΔPtrv) lorsque ladite première condition d'annulation est satisfaite ;
limitation dudit taux d'accroissement (ΔPtrv) lorsque ladite deuxième condition d'annulation est satisfaite ;
ledit procédé étant **caractérisé en ce qu'**il comprend en outre l'étape de
détermination d'une valeur dudit taux d'accroissement lorsqu'une vitesse (V) dudit véhicule est faible, la valeur étant supérieure à une valeur dudit taux d'accroissement lorsque ladite vitesse (V) est élevée.
